# EUROPEAN PATENT APPLICATION

(11) **EP 4 510 645 A1**
(43) Date of publication of application: **19.02.2025**
(21) Application number: 23806935.5
(22) Date of filing: 16.05.2023
(51) Int. Cl.: H04W 4/06

(54) **BROADCAST MESSAGE TRANSMISSION METHOD AND APPARATUS, AND NETWORK FUNCTION AND STORAGE MEDIUM**

(30) Priority: 18.05.2022 CN 202210547476
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Rong, Beijing 100032 (CN); SONG, Yue, Beijing 100032 (CN); JIANG, Yi, Beijing 100032 (CN); ZHANG, Jianyin, Beijing 100032 (CN)
(74) Representative: Hertin und Partner Rechts- und Patentanwälte PartG mbB
(86) International application number: PCT/CN2023/094558
(87) International publication number: WO 2023/221983

(57) **Abstract**

The present disclosure in some embodiments provides a broadcast message transmission method and device, a network function and a storage medium. The method includes the steps that a first SMF creates and/or revises and/or releases a first group of MBS sessions for a first VN group, the first MBS session is used for sending one or more multicast messages and/or one or more broadcast messages in the first VN group to at least one first terminal, and the first terminal represents one or more terminals within the first VN group.

## Description

### CROSS-REFERENCE TO RELATED APPLICATION

This application claims a priority of the Chinese patent application No. 202210547476.1 filed on May 18, 2022, which is incorporated herein by reference in its entirety.

### FIELD

The present disclosure relates to the field of wireless communications technologies, and in particular, to a broadcast message transmission method and apparatus, a network function, and a storage medium.

### BACKGROUND

In the related art, a Multicast and Broadcast Service (MBS) solution transmits exogenous broadcast data, and cannot implement broadcast between terminals in a 5th Generation (5G) mobile communication technology Local Area Network (LAN).

### SUMMARY

Embodiments of the present disclosure provide a method and device for transmitting a broadcast message, a network function, and a storage medium.

The technical solutions of the embodiments of the present disclosure are implemented as follows.

In one aspect, an embodiment of the present disclosure provides a method for transmitting a broadcast message, performed by a first Session Management Function (SMF), the method including: performing a first operation for a first Virtual Network (VN) group; the first operation includes at least one of: creating a first Multicast and Broadcast Service (MBS) session; revising the first MBS session; releasing the first MBS session; deleting the first MBS session; or disabling the first MBS session. The first MBS session is used to send one or more multicast messages and/or one or more broadcast messages in the first VN group to at least one first terminal, and the first terminal represents one or more terminals within the first VN group.

In some possible embodiments of the present disclosure, the multicast message and/or the broadcast message in the first VN group include some or all broadcast messages and/or some or all multicast messages that originate from an internal interface of the first VN group.

In some possible embodiments of the present disclosure, the broadcast message(s) and/or the multicast message(s) in the first VN group is(are) sent by a first User Plane Function (UPF) serving the first VN group to a first base station by using the first MBS session, and then the first base station sends the broadcast message and/or the multicast message to a first terminal by using a Point-To-Point (PTP) or Point-To-Multipoint (PTM) manner. The first base station represents a base station connected to a first UPF and serving the first VN group.

In some possible embodiments of the present disclosure, the first SMF decides to create the first MBS session based on at least one of the following: first VN group subscription information, first VN group local configuration, first UPF capability serving the first VN group, first SMF capability, a quantity of terminals accessed by the first UPF, or a first indication of a first network function, where the first indication is used to require the first SMF to create an MBS session for the first VN group.

In some possible embodiments of the present disclosure, the performing the first operation on the first VN group includes: perform the first operation on at least one first UPF for the first VN group, where the first UPF represents a UPF serving the first VN group.

In some possible embodiments of the present disclosure, the performing the first operation on the first VN group includes: sending a first requirement to the first UPF; where the first requirement is used to request to create the first MBS session, and the first requirement carries therein a first identifier used to identify the first MBS session.

In some possible embodiments of the present disclosure, the first requirement further carries therein at least one of the following information of the first MBS session: a first Packet Detection Rule (PDR); or a first Forwarding Action Rule (FAR).

In some possible embodiments of the present disclosure, the method further includes: sending a second requirement to a first Access and Mobility Management Function (AMF), where the first AMF represents an AMF corresponding to a Protocol Data Unit (PDU) session of the first terminal served by the first UPF in the first VN group; the second requirement is used to request to establish a session resource related to the first MBS session, and the second requirement carries therein the first identifier and first information; and the first information represents PDU session information of a terminal in the VN group associated with the first AMF.

In some possible embodiments of the present disclosure, the performing the first operation on the first VN group includes: sending a third requirement to the first UPF; where the third requirement is used to request to revise or disable the first MBS session, and the third requirement carries therein a first identifier used to identify the first MBS session and a first PDR and/or a first FAR of the first MBS session.

In some possible embodiments of the present disclosure, the performing a first operation on the first VN group includes: sending a fourth requirement to the first UPF; where the fourth requirement is used to request to release or delete the first MBS session, and the fourth requirement carries therein a first identifier used to identify the first MBS session.

In some possible embodiments of the present disclosure, creating the first MBS session for the first VN group includes: sending a fifth requirement to the first UPF; where the fifth requirement is used to request to establish or revise a PDU session for the first terminal, and the fifth requirement does not carry therein a PDR and/or a FAR of a downlink multicast message and/or a broadcast message.

In some possible embodiments of the present disclosure, the method further includes: transmitting a sixth requirement to a Radio Access Network (RAN) by using the first AMF, where the sixth requirement is used to request to create a first context of the first MBS session, and/or is used to request to establish a mapping between the first context and a second context of the first PDU session, and/or is used to request to allocate an N3 interface tunnel resource to the first MBS session.

In some possible embodiments of the present disclosure, the broadcast messages and/or the multicast messages on the internal interface of the first VN group match and forward the downlink data packet in the first PDR and/or the first FAR of the first MBS session.

In some possible embodiments of the present disclosure, a source interface of the first PDR includes an internal interface of the first VN group, and a destination address of the first PDR includes a broadcast address and/or a multicast address; and the first FAR is used to instruct to forward the broadcast message and/or the multicast message that match the first PDR through the N3 interface tunnel of the first MBS session, and/or is used to instruct to forward the broadcast message and/or the multicast message that match the first PDR through the N9 interface tunnel of the first MBS session.

In some possible embodiments of the present disclosure, a second PDR and/or a second FAR of the PDU session of the first terminal do not support downlink broadcast message and/or multicast message matching, and do not support downlink broadcast message and/or multicast message forwarding.

In another aspect, the present disclosure provides in some embodiments a device for transmitting a broadcast message, including: a session management unit, configured to create and/or revise and/or release a first MBS session for a first VN group; the first MBS session is used to send one or more multicast messages and/or one or more broadcast messages in the first VN group to at least one first terminal, and the first terminal represents one or more terminals within the first VN group.

In yet another aspect, the present disclosure provides in some embodiments a first SMF, including: a first processor and a first communication interface. The first communication interface is configured to create and/or revise and/or release a first MBS session for a first VN group. The first MBS session is used to send one or more multicast messages and/or one or more broadcast messages in the first VN group to at least one first terminal, and the first terminal represents one or more terminals within the first VN group.

In still yet another aspect, the present disclosure provides in some embodiments a first SMF, including: a first processor and a first memory configured to store a computer program executable on the processor, when running the computer program, the first processor performs steps of any method described above.

In still yet another aspect, the present disclosure provides in some embodiments a storage medium on which a computer program is stored, where the computer program, when executed by a processor, implements the steps of any method described above.

In the broadcast message transmission method and device, the network function and the storage medium provided by the embodiments of the invention, a first SMF creates and/or revises and/or releases a first MBS session for a first VN group; wherein the first MBS session is used for sending one or more multicast messages and/or one or more broadcast messages in the first VN group to at least one first terminal; and the first terminal represents one or more terminals within the first VN group. Based on the foregoing solutions, multicast messages and/or broadcast messages may be transmitted in the LAN, thereby saving N3 interface and air interface bandwidth, reducing service latency, and improving data transmission reliability.

### BRIEF DESCRIPTION OF THE DRAWINGS

FIG. 1 is a schematic flowchart of a broadcast message transmission method according to an embodiment of the present disclosure;
FIG. 2 is a schematic diagram of implementing session management according to an embodiment of the present disclosure;
FIG. 3 is a schematic interaction flowchart of a broadcast message transmission method according to an application embodiment of the present disclosure;
FIG. 4 is a schematic interaction flowchart of another broadcast message transmission method according to an application embodiment of the present disclosure;
FIG. 5 is a schematic structural diagram of a broadcast message transmission device according to an embodiment of the present disclosure; and
FIG. 6 is a schematic structural diagram of a first SMF according to an embodiment of the present disclosure.

### DETAILED DESCRIPTION

The present disclosure will be described hereinafter in conjunction with the drawings and embodiments.

In 3rd Generation Partnership Project (3GPP) standards, a 5G LAN provides a broadcast function between terminals. After the terminal sends broadcast message(s) or receives the broadcast message(s) sent through the N6 interface and the N19 interface, a UPF copies the broadcast data according to the broadcast forwarding principle, and sends the broadcast message(s) to other terminals through sessions of all currently accessed 5G VN group members. When the broadcast data is transmitted in the 5G LAN, the same data packet is repeatedly sent between the Next Generation RAN (NG-RAN) and the UPF and between the NG-RAN and the terminals, and if the number of terminals is huge, the N3 interface and the air interface bandwidth will be greatly occupied at the same time. In addition, if a terminal service has a high requirement on latency and reliability, a large amount of concurrent broadcast data also affects network performance.

In the related art, an MBS solution is proposed for a broadcast message, and the solution is to transmit exogenous broadcast data, and the broadcast message in the 5G LAN may be sent by a terminal, or may be received from an N6 interface or an N19 interface. In addition, a data forwarding rule of the 5G LAN is also established on an internal interface of the 5G VN, so that the MBS solution cannot be applied to the 5G LAN.

Based on this, in the embodiments of the present disclosure, the first SMF creates and/or revises and/or releases a first MBS session for the first VN group, where the first MBS session is used to send one or more multicast messages and/or one or more broadcast messages in the first VN group to at least one first terminal, and the first terminal represents one or more terminals within the first VN group. Based on the foregoing solution, multicast messages and/or broadcast messages may be transmitted in the LAN, thereby saving N3 interface and air interface bandwidth, reducing service latency, and improving data transmission reliability.

The present disclosure will be further described in detail below with reference to the accompanying drawings and embodiments.

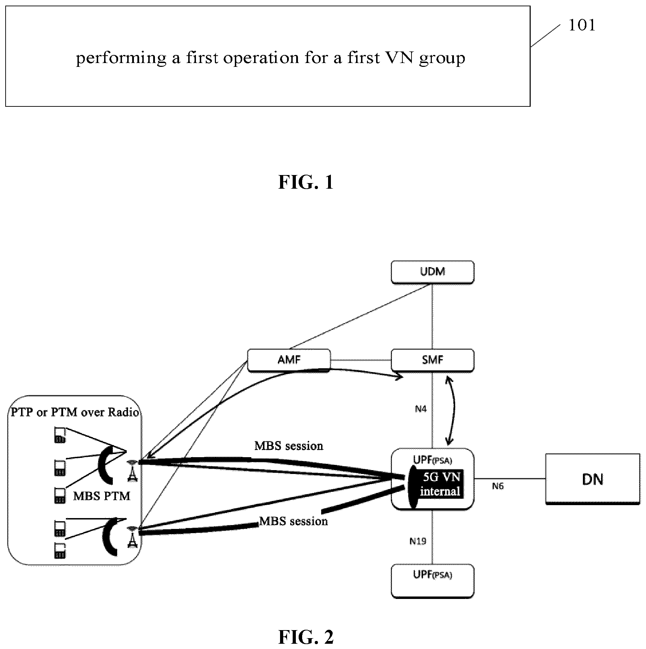

An embodiment of the present disclosure provides a method for transmitting a broadcast message, performed by a first SMF, as shown in FIG. 1, the method includes: Step 101: performing a first operation for the first VN group, where the first operation includes at least one of the following: creating a first MBS session; revising the first MBS session; releasing the first MBS session; deleting the first MBS session; or disabling the first MBS session.

The first MBS session is used to send one or more multicast messages and/or one or more broadcast messages in the first VN group to at least one first terminal, and the first terminal represents one or more terminals within the first VN group.

Here, the first SMF may be an SMF supporting MBS session creation. The MBS session may be a session of a multicast service and/or a broadcast service.

In actual application, the first SMF decides to create the first MBS session according to at least one of the following: first VN group subscription information, first VN group local configuration, first UPF capability serving the first VN group, first SMF capability, a quantity of terminals accessed by the first UPF, or a first indication of a first network function, where the first indication is used to require the first SMF to create an MBS session for the first VN group.

The first VN group subscription information includes subscription information of a first terminal within the first VN group in an operator network, and may be an indicator used to indicate that the first VN group needs to transmit multicast data and/or broadcast data through an MBS session. The first VN group local configuration includes local configuration information of the first terminal within the first VN group. The capabilities of the UPF or SMF include a capability of whether creating an SMF session is supported. Herein, the first UPF refers to a UPF serving the first VN group. Generally, one VN group may be served by one or more UPFs. The first indication may be, for example, a policy delivered by the first SMF by a network function such as a Policy Control Function (PCF) and a Unified Data Management (UDM) of the 5G core network, and corresponding policy content is to instruct the first SMF to create an MBS session for the 5G VN group.

In an embodiment, the multicast messages and/or broadcast messages in the first VN group include some or all broadcast messages and/or some or all multicast messages originating from an internal interface of the first VN group.

That is, the solution of the present disclosure transmits endogenous broadcast data, that is, multicast messages and/or broadcast messages originated from an internal interface of the LAN. For example, the first VN group internal interface may be a 5G VN internal interface.

In an embodiment, the broadcast messages and/or the multicast messages in the first VN group are sent by a first UPF serving the first VN group to a first base station through the first MBS session, and then sent by the first base station to one or more first terminals through PTP or PTM; wherein the first base station represents a base station connected to a first UPF and serving the first VN group.

Specifically, the multicast message and/or the broadcast message sent to the first terminal are sent by the UPF serving the first terminal within the first VN group to the first base station of the first terminal through the first MBS session, and then sent by the first base station to the first terminal through PTP or PTM.

In addition, from a data plane perspective, the broadcast messages and/or the multicast messages on the internal interface of the first VN group perform downlink data packet matching and forwarding in the first PDR and/or the first FAR of the first MBS session.

In an embodiment, the performing a first operation on the first VN group includes: performing a first operation on at least one first UPF for the first VN group, where the first UPF represents a UPF serving the first VN group.

In practical applications, creating an MBS session for a VN group includes two cases.

Case 1: the one or more UPFs serving the VN group already provide PDU session services for the one or more terminals of the VN group, but the VN group does not create an MBS session. At this time, an MBS session is created for the VN group on the one or more UPFs serving the VN group.

Case 2: a first MBS session is created for the VN group on the UPF serving the VN group with a PDU session initiation procedure of the terminal in the VN group.

For the foregoing Case 1, in an embodiment, the performing a first operation on the first VN group includes: sending the first requirement to the first UPF. The first requirement is used to request to create the first MBS session, and the first requirement carries therein a first identifier used to identify the first MBS session, for example, an MBS session identifier (ID).

Here, the first identifier is used to identify the first MBS session during creation, revision, and release of the entire session management.

In addition, in an embodiment, the first requirement further carries therein at least one of the following information of the first MBS session: a first PDR; or a First FAR.

Herein, the first PDR is configured to detect a broadcast message and/or a multicast message in a downlink VN group, that is, a downlink PDR. Specifically, a source interface of the first PDR includes an internal interface of the first VN group. For example, in the downlink PDR for detecting the broadcast message and/or the multicast message in the downlink 5G VN group, the source interface is set to "5G VN internal". A destination address of the first PDR includes a broadcast address and/or a multicast address.

The first FAR is configured to send the broadcast message and/or the multicast message to the terminal in a broadcast and/or multicast manner through the first MBS session, where the first FAR corresponds to the first PDR. Specifically, is configured to instruct to forward the broadcast message and/or the multicast message that match the first PDR through an N3 interface tunnel of the first MBS session, and/or instruct to forward the broadcast message and/or the multicast message that match the first PDR through an N9 interface tunnel of the first MBS session. Specifically, the first FAR is used to indicate that a destination interface is an access side. Optionally, the first FAR is used to indicate an N3 interface and/or N9 tunnel information related to the first MBS session. The information synchronization manner of the N3 interface and/or the N9 tunnel interface may adopt the current 3GPP standard, namely multicast transport is used over N3mb or N9mb, or unicast transport is used over N3mb or N9mb.

In the embodiments of the present disclosure, it is also supported to revise or disable the MBS session of the created VN group. In an embodiment, the performing a first operation on the first VN group includes: sending a third requirement to the first UPF.

The third requirement is used to request to revise or disable the first MBS session, and the third requirement carries therein a first identifier used to identify the first MBS session and a first PDR and/or a first FAR of the first MBS session.

In the embodiments of the present disclosure, it is also supported to release or delete the MBS session of the created VN group. In an embodiment, the performing a first operation on the first VN group includes: sending a fourth requirement to the first UPF.

The fourth requirement is used to request to release or delete the first MBS session, and the fourth requirement carries therein a first identifier used to identify the first MBS session.

In addition, after the first MBS session is created on the first UPF, a session resource further needs to be established for the first MBS session. Based on this, in an embodiment, the method further includes: sending the second requirement to the first AMF.

The first AMF represents an AMF corresponding to a PDU session of a first terminal served by a first UPF; the second requirement is used to request to establish a session resource related to the first MBS session, and the second requirement carries therein the first identifier and first information; and the first information represents PDU session information of a terminal in a VN group associated with the first AMF.

Herein, after receiving the second requirement, the first AMF requests the RAN to create the session resource of the first MBS session. In an embodiment, the method further includes: sending a sixth requirement to the RAN through the first AMF.

The sixth requirement is used to request to create a first context of the first MBS session, and/or is used to request to establish a mapping between the first context and a second context of the first PDU session, and/or is used to request to allocate an N3 interface tunnel resource to the first MBS session.

Here, the sixth requirement may be an N2 message request. Specifically, the first SMF may invoke the *Namf_Communication_N1N2MessageTransfer* service of the AMF, and add the PDU session identifier of the first terminal and the session identifier of the MBS session to the invocation request. After completing the request content of the N2 message request, the RAN returns an N2 message response to the AMF.

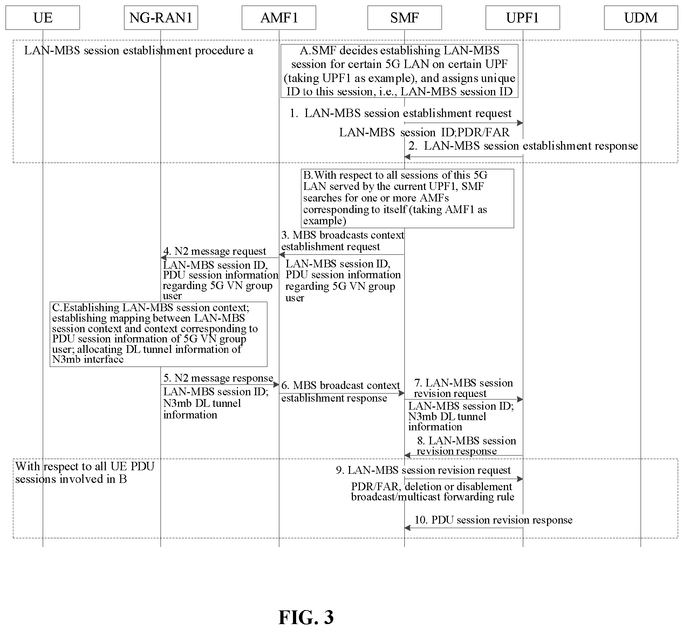

In the following, with reference to the schematic diagram of the MBS session management principle shown in FIG. 2. The Case 1 of creating an MBS session is further described by using the interaction flow example in FIG. 3.

Referring to FIG. 3, the UPF1 has provided PDU session services for a plurality of terminals in the 5G LAN, but has not yet created an MBS session for a 5G VN group composed of the plurality of terminals on the UPF1 (the MBS session is referred to as a LAN-MBS session in the example of FIG. 2). If the SMF decides to create an MBS session for the 5G VN group on UPF1, then the following procedure is performed, including:

Step 1: The SMF initiates a LAN-MBS session establishment request to the UPF1, and the LAN-MBS session establishment request carries therein a session ID of the LAN-MBS session and PDR and/or FAR information related to the LAN-MBS session.

Here, UPF1 is a UPF serving the 5G VN group.

Step 2: The UPF1 returns a LAN-MBS session establishment response to the SMF.

Step 3: The SMF initiates a LAN-MBS session resource establishment request to the AMF1, and the LAN-MBS session resource establishment request carries therein a session ID of the LAN-MBS session and PDU session information of a 5G VN group terminal associated with the AMF1.

Here, AMF1 is an AMF corresponding to a PDU session of a terminal in a 5G VN group served by UPF1.

Step 4: The AMF1 sends a N2 message to the NG-RAN: 1. requesting/notifying the NG-RAN to create a LAN-MBS session context; 2. requesting/notifying the NG-RAN to perform relationship mapping between the LAN-MBS session context and a context corresponding to PDU session information of the 5G VN group terminal; and 3. requesting the NG-RAN to allocate downlink (DL) tunnel information (Tunnel Infor) of the N3mb interface.

Step 5: The NG-RAN returns an N2 message request to the AMF1, and if the NG-RAN uses unicast transport over N3mb (unicast transport over N3mb), the N2 message request carries therein DL Tunnel Infor of the N3mb interface.

Step 6: The AMF1 sends a LAN-MBS session resource establishment request response to the SMF.

Step 7: The SMF initiates a LAN-MBS session revision request to the UPF1, and the LAN-MBS session revision request carries therein a session ID of the LAN-MBS and PDR and/or FAR information related to the LAN-MBS session.

Here, if the NG-RAN uses unicast transport over N3mb or N9mb, N3/ N9 tunnel information related to the LAN-MBS session is indicated in the FAR for data forwarding.

Step 8: The UPF1 returns a session revision response to the SMF.

Step 9: The SMF sends a session revision request to the UPF1 to release, delete or disable PDR and/or FAR information related to the LAN-MBS session.

Step 10: The UPF1 returns a session revision response to the SMF.

For the foregoing Case 2, in an embodiment, the performing a first operation on the first VN group includes: sending a fifth requirement to the first UPF.

The fifth requirement is used to request to establish or revise a PDU session for the first terminal, and the fifth requirement does not carry therein a PDR and/or a FAR of a downlink multicast message and/or a broadcast message.

In an embodiment, the second PDR and/or the second FAR of the PDU session of the first terminal do not support downlink broadcast message and/or multicast message matching, and do not support downlink broadcast message and/or multicast message forwarding.

Since the request for establishing or revising the PDU session does not carry the downlink multicast message and/or the PDR and/or FAR of the broadcast message, broadcast data and/or multicast data will not be forwarded on the PDR and/or FAR of each related terminal PDU session, so that the broadcast data and/or multicast data sent to the corresponding terminal will be sent to the terminal through the MBS session.

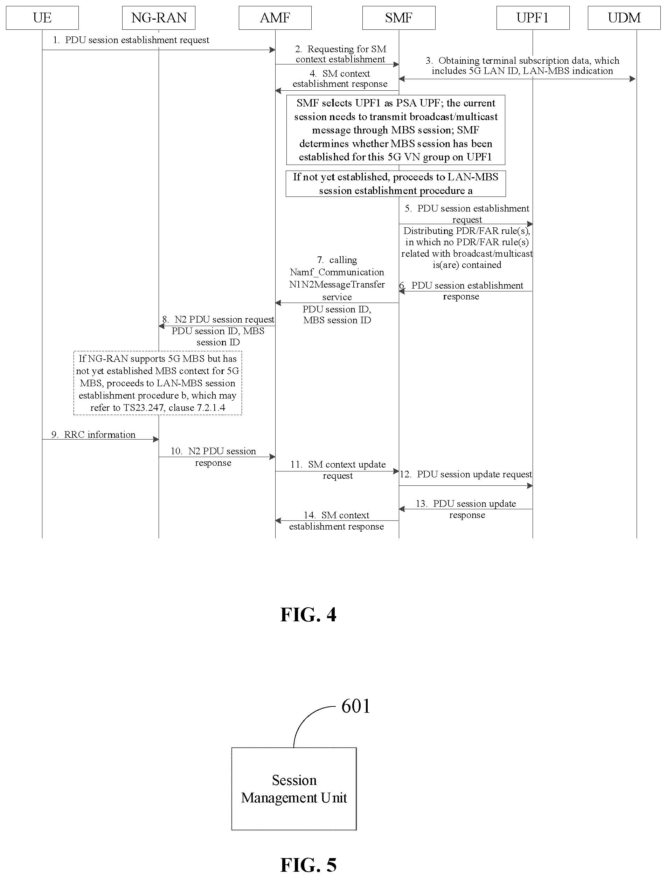

In the following, with reference to the schematic diagram of the MBS session management principle shown in FIG. 2, a first case of creating an MBS session is further described by using the interaction flow example in FIG. 4.

Step 1 through Step 4: The 5G VN group terminal initiates a 5G LAN session establishment request. The SMF obtains subscription data of the terminal.

Here, optionally, the subscription data of the terminal may carry therein features of the 5G LAN, and a LAN-MBS session needs to be used for broadcast and/or multicast transmission.

Step 5: The SMF sends a PDU session establishment request of the terminal to the UPF1, where the PDR/FAR rule does not include broadcast/multicast related PDR/FAR information.

Step 6: The UPF1 returns a PDU session establishment response to the SMF.

Step 7: The SMF invokes the *Namf_Communication_N1N2MessageTransfer* service of the AMF, and the *Namf_Communication_N1N2MessageTransfer* service carries therein the PDU session ID and the MBS session ID of the terminal UE. In this way, if no MBS session context has been created on the NG-RAN, the NG-RAN is requested to create the MBS session context. In addition, the NG-RAN is notified of the relationship between the MBS session context and the PDU session context of the UE, and mapping is performed.

Step 8: The AMF sends an N2 PDU session request to the NG-RAN, where the N2 PDU session request carries therein the PDU session ID and the MBS session ID of the current terminal. The NG-RAN is requested/notified to create an MBS session context. Furthermore, the NG-RAN is requested/notified to perform relationship mapping between the MBS session context and the PDU session context of the current UE.

Step 9: The NG-RAN establishes a wireless connection related to the MBS session with the UE.

Step 10 through Step 14: Reference is made to a standard PDU session establishment procedure.

Based on the foregoing solution, multicast messages and/or broadcast messages may be transmitted in the LAN, such that N3 interfaces and air interface bandwidths are saved through aggregation of the multicast messages and/or the broadcast messages, thereby reducing service delays and improving data transmission reliability.

In order to implement the method for transmitting a broadcast message according to an embodiment of the present disclosure, an embodiment of the present disclosure further provides a device for transmitting a broadcast message, which is provided on a first SMF, as shown in FIG. 5, the device includes: a session management unit 601 is configured to perform a first operation for a first VN group, where the first operation includes at least one of the following: creating a first MBS session; revising the first MBS session; releasing the first MBS session; deleting the first MBS session; or disabling the first MBS session; wherein the first MBS session is used to send one or more multicast messages and/or one or more broadcast messages in the first VN group to at least one first terminal, and the first terminal represents one or more terminals within the first VN group.

In an embodiment, the multicast message and/or the broadcast message in the first VN group include part or all multicast messages and/or part or all broadcast messages that originate from an internal interface of the first VN group.

In an embodiment, the broadcast messages and/or the multicast messages in the first VN group are sent by a first user plane function (UPF) serving the first VN group to a first base station through the first MBS session, and then sent by the first base station to one or more first terminals through PTP or PTM.

The first base station represents a base station connected to a first UPF and serving the first VN group.

In an embodiment, the first SMF decides to create the first MBS session according to at least one of the following: first VN group subscription information, first VN group local configuration, first UPF capability serving the first VN group, first SMF capability, a quantity of terminals accessed by the first UPF, and a first indication of a first network function, where the first indication is used to require the first SMF to create an MBS session for the first VN group.

In an embodiment, the session management unit 601 is configured to: perform the first operation on at least one first UPF for the first VN group, where the first UPF represents a UPF serving the first VN group.

In an embodiment, the session management unit 601 is configured to: send a first requirement to the first UPF; where the first requirement is used to request to create the first MBS session, and the first requirement carries therein a first identifier used to identify the first MBS session.

In an embodiment, the first requirement further carries therein at least one of the following information of the first MBS session: a first PDR; or a first FAR.

In an embodiment, the session management unit 601 is further configured to: send a second requirement to the first AMF; where the first AMF represents an AMF corresponding to a PDU session of the first terminal served by the first UPF; the second requirement is used to request to establish a session resource related to the first MBS session, and the second requirement carries therein the first identifier and first information; and the first information represents PDU session information of a terminal in the VN group associated with the first AMF.

In an embodiment, the session management unit 601 is configured to: send a third requirement to the first UPF; where the third requirement is used to request to revise or disable the first MBS session, and the third requirement carries therein a first identifier used to identify the first MBS session and a first PDR and/or a first FAR of the first MBS session.

In an embodiment, the session management unit 601 is configured to: send a fourth requirement to the first UPF; where the fourth requirement is used to request to release or delete the first MBS session, and the fourth requirement carries therein a first identifier used to identify the first MBS session.

In an embodiment, the session management unit 601 is configured to: send a fifth requirement to the first UPF; where the fifth requirement is used to request to establish or revise a PDU session for the first terminal, and the fifth requirement does not carry therein a PDR and/or a FAR of a downlink multicast message and/or a broadcast message.

In an embodiment, the session management unit 601 is further configured to: transmit a sixth requirement to the RAN by using the first AMF, where the sixth requirement is used to request to create a first context of the first MBS session, and/or is used to request to establish a mapping between the first context and a second context of the first PDU session, and/or is used to request to allocate an N3 interface tunnel resource to the first MBS session.

In an embodiment, the broadcast messages and/or the multicast messages on the internal interface of the first VN group match and forward the downlink data packet in the first PDR and/or the first FAR of the first MBS session.

In an embodiment, a source interface of the first PDR includes an internal interface of the first VN group, and a destination address of the first PDR includes a broadcast address and/or a multicast address; and the first FAR is used to instruct to forward a broadcast message and/or a multicast message that match the first PDR through an N3 interface tunnel of the first MBS session, and/or is used to instruct to forward a broadcast message and/or a multicast message that match the first PDR through an N9 interface tunnel of the first MBS session.

In an embodiment, a second PDR and/or a second FAR of the PDU session of the first terminal do not support matching of downlink broadcast message and/or multicast message, and do not support forwarding downlink broadcast message and/or multicast message.

In actual application, the session management unit 601 may be implemented by a communications interface in a broadcast message transmission device.

It should be noted that when the device for transmitting a broadcast message provided in the foregoing embodiment transmits a broadcast message, only division of the foregoing program modules is used as an example for description, and in actual application, the foregoing processing may be allocated to different program modules as required, that is, an internal structure of the device is divided into different program modules, to complete all or some of the foregoing processing. In addition, the device for transmitting a broadcast message provided in the foregoing embodiment and the method embodiment for transmitting a broadcast message belong to the same concept, and for a specific implementation process thereof, refer to the method embodiment, and details are not described herein again.

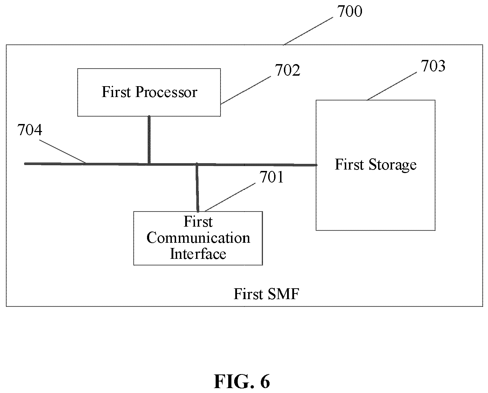

Based on hardware implementation of the foregoing program modules, and to implement the method on the first SMF side according to the embodiments of the present disclosure, an embodiment of the present disclosure further provides a first SMF, as shown in FIG. 6, where the first SMF 700 includes: a first communication interface 701 can exchange information with other network nodes; the first processor 702 is connected to the first communications interface 701, to implement information exchange with another network node, and when a computer program is run, performs the method provided in one or more technical solutions on the first SMF side. The computer program is stored in the first storage 703.

Specifically, the first communications interface 701 is configured to: performing a first operation for the first VN assembly; the first operation includes at least one of: creating a first MBS session; revising the first MBS session; releasing the first MBS session; deleting the first MBS session; or disabling the first MBS session; wherein the first MBS session is used to send one or more multicast messages and/or one or more broadcast messages in the first VN group to at least one first terminal, and the first terminal represents one or more terminals within the first VN group.

In an embodiment, the multicast message and/or the broadcast message in the first VN group include some or all multicast messages and/or some or all broadcast messages that originate from an internal interface of the first VN group.

In an embodiment, the broadcast messages and/or the multicast messages in the first VN group are sent by a first user plane function (UPF) serving the first VN group to a first base station through the first MBS session, and then sent by the first base station to one or more first terminals through PTP or PTM.

The first base station represents a base station connected to a first UPF and serving the first VN group.

In an embodiment, the first SMF decides to create the first MBS session according to at least one of the following: first VN group subscription information, first VN group local configuration, first UPF capability serving the first VN group, first SMF capability, a quantity of terminals accessed by the first UPF, and a first indication of a first network function, where the first indication is used to require the first SMF to create an MBS session for the first VN group.

In an embodiment, the first communications interface 701 is configured to: perform a first operation on at least one first UPF for the first VN group, where the first UPF represents a UPF serving the first VN group.

In an embodiment, the first communications interface 701 is configured to: send a first requirement to a first UPF; where the first requirement is used to request to create the first MBS session, and the first requirement carries therein a first identifier used to identify the first MBS session.

In an embodiment, the first requirement further carries therein at least one of the following information of the first MBS session: a first PDR; or a first FAR.

In an embodiment, the first communications interface 701 is further configured to: send a second requirement to the first AMF; where the first AMF represents an AMF corresponding to a PDU session of a first terminal served by a first UPF; the second requirement is used to request to establish a session resource related to the first MBS session, and the second requirement carries therein the first identifier and first information; and the first information represents PDU session information of a terminal in a VN group associated with the first AMF.

In an embodiment, the first communications interface 701 is configured to: send a third requirement to the first UPF; where the third requirement is used to request to revise or disable the first MBS session, and the third requirement carries therein a first identifier used to identify the first MBS session and a first PDR and/or a first FAR of the first MBS session.

In an embodiment, the first communications interface 701 is configured to: send a fourth requirement to the first UPF; where the fourth requirement is used to request to release or delete the first MBS session, and the fourth requirement carries therein a first identifier used to identify the first MBS session.

In an embodiment, the first communications interface 701 is configured to: send a fifth requirement to the first UPF; where the fifth requirement is used to request to establish or revise a PDU session for the first terminal, and the fifth requirement does not carry therein a PDR and/or a FAR of a downlink multicast message and/or a broadcast message.

In an embodiment, the first communications interface 701 is further configured to: transmit a sixth requirement to the RAN by using the first AMF, where the sixth requirement is used to request to create a first context of the first MBS session, and/or is used to request to establish a mapping between the first context and a second context of the first PDU session, and/or is used to request to allocate an N3 interface tunnel resource to the first MBS session.

In an embodiment, the broadcast messages and/or the multicast messages on the internal interface of the first VN group match and forward the downlink data packet in the first PDR and/or the first FAR of the first MBS session.

In an embodiment, a source interface of the first PDR includes an internal interface of the first VN group, and a destination address of the first PDR includes a broadcast address and/or a multicast address; and the first FAR is used to instruct to forward a broadcast message and/or a multicast message that match the first PDR through an N3 interface tunnel of the first MBS session, and/or is used to instruct to forward a broadcast message and/or a multicast message that match the first PDR through an N9 interface tunnel of the first MBS session.

In an embodiment, the second PDR and/or the second FAR of the PDU session of the first terminal do not support downlink broadcast message and/or multicast message matching, and do not support downlink broadcast message and/or multicast message forwarding.

It should be noted that specific processing processes of the first processor 702 and the first communications interface 701 may be understood with reference to the foregoing method.

Certainly, in actual application, the components in the first SMF 700 are coupled together by using the bus system 704. It may be understood that the bus system 704 is configured to implement connection and communication between these components. The bus system 704 includes, in addition to a data bus, a power bus, a control bus, and a status signal bus. However, for clear description, various buses are marked as the bus system 704 in FIG. 6.

The first storage 703 in the embodiments of the present disclosure is configured to store various types of data to support operations of the first SMF 700. Examples of such data include any computer program for operating on the first SMF 700.

The method disclosed in the embodiments of the present disclosure may be applied to the first processor 702, or implemented by the first processor 702. The first processor 702 may be an integrated circuit chip having a signal processing capability. In an implementation process, steps of the foregoing method may be completed by using an integrated logic circuit of hardware in the first processor 702 or an instruction in a form of software. The first processor 702 may be a general-purpose processor, a Digital Signal Processor (DSP), another programmable logic device, a discrete gate or transistor logic device, a discrete hardware component, or the like. The first processor 702 may implement or execute the methods, steps, and logical block diagrams disclosed in the embodiments of the present disclosure. The general-purpose processor may be a microprocessor or any conventional processor or the like. The steps of the method disclosed in the embodiments of the present disclosure may be directly executed by a hardware decoding processor, or executed by a combination of hardware and software modules in the decoding processor. The software modules may be located in a storage medium, the storage medium is located in the first storage 703, and the first processor 702 reads information in the first storage 703 and completes the steps of the foregoing method in combination with hardware of the first processor 702.

In an exemplary embodiment, the first SMF 700 may be implemented by one or more application specific integrated circuits (Application Specific Integrated Circuit, ASIC), DSPs, programmable logic devices (Programmable Logic Device, PLD), complex programmable logic devices (Complex Programmable Logic Device, CPLD), field-programmable gate arrays (Field-Programmable Gate Array, FPGA), general-purpose processors, controllers, micro-controllers (Micro Controller Unit, MCU), microprocessors, or other electronic components, and is configured to perform the foregoing method.

It may be understood that the memory (the first storage 703) in the embodiments of the present disclosure may be a volatile memory or a non-volatile memory, or may include both the volatile memory and the non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a magnetic random access memory, a flash memory, a magnetic surface memory, an optical disk, or a Compact Disc Read-Only Memory (CD-ROM); and the magnetic surface memory may be a magnetic disk memory or a magnetic tape memory. The volatile memory may be a Random Access Memory (RAM), which is used as an external cache. By way of example but not limitation, many forms of RAMs may be used, for example, a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a Synchronous Link Dynamic Random Access Memory (SLDRAM), and a Dynamic Random Access Memory (DRAM). The memory described in the embodiments of the present disclosure is intended to include, but not limited to, these and any other suitable types of memories.

In an exemplary embodiment, an embodiment of the present disclosure further provides a storage medium, i.e., a computer storage medium, which is specifically a computer readable storage medium, for example, including a first storage 703 storing a computer program, and the computer program may be executed by the first processor 702 of the first SMF 700 to complete the steps of the method on the first SMF side. The computer-readable storage medium may be a memory such as FRAM, ROM, PROM, EPROM, EEPROM, Flash Memory, magnetic surface memory, optical disk, or CD-ROM.

It should be noted that "first", "second", and the like are used to distinguish similar objects, and are not necessarily used to describe a specific order or sequence.

The term "and/or" herein is merely an association relationship describing an associated object, and indicates that three relationships may exist, for example, A and/or B, and may indicate three cases: A exists separately, A and B exist simultaneously, and B exists separately. In addition, the term "at least one" herein means any combination of at least two of any one or more of a plurality, for example, including at least one of A, B, and C, and may mean including any one or more elements selected from the group consisting of A, B, and C.

In addition, the technical solutions described in the embodiments of the present disclosure may be arbitrarily combined without conflict.

The above description is only a preferred embodiment of the present disclosure and is not intended to limit the protection scope of the present disclosure.

## Claims

1. A method for transmitting a broadcast message, performed by a first Session Management Function (SMF), the method comprising:
performing a first operation for a first Virtual Network (VN) group, wherein the first operation comprises at least one of:
creating a first Multicast and Broadcast Service (MBS) session;
revising the first MBS session;
releasing the first MBS session;
deleting the first MBS session; or
disabling the first MBS session,
wherein the first MBS session is used to send one or more multicast messages and/or one or more broadcast messages in the first VN group to at least one first terminal, and the first terminal represents one or more terminals within the first VN group.

2. The method according to claim 1, wherein the multicast messages and/or the broadcast messages in the first VN group comprise part or all of the multicast messages and/or part or all of the broadcast messages originating from an internal interface of the first VN group.

3. The method according to claim 1, wherein the broadcast messages and/or the multicast messages in the first VN group are sent by a first User Plane Function (UPF) serving the first VN group to a first base station through the first MBS session, and then sent by the first base station to one or more first terminals through Point-To-Point (PTP) or Point-To-Multipoint (PTM),
wherein the first base station represents a base station connected to a first UPF and serving the first VN group.

4. The method according to claim 1, wherein the first SMF decides to create the first MBS session according to at least one of the following: first VN group subscription information, first VN group local configuration, first UPF capability serving the first VN group, first SMF capability, a quantity of terminals accessed by the first UPF, or a first indication of a first network function; and
wherein the first indication is used to require the first SMF to create an MBS session for the first VN group.

5. The method according to any one of claims 1 to 4, wherein the performing the first operation for the first VN group comprises:
performing the first operation on at least one first UPF for the first VN group, wherein the first UPF represents a UPF serving the first VN group.

6. The method according to claim 5, wherein the performing the first operation for the first VN group comprises:
sending a first requirement to the first UPF,
wherein the first requirement is used to request to create the first MBS session, and the first requirement carries therein a first identifier used to identify the first MBS session.

7. The method according to claim 6, wherein the first requirement further carries therein at least one of the following information of the first MBS session:
a first Packet Detection Rule (PDR); or
a first Forwarding Action Rule (FAR).

8. The method according to claim 6, further comprising:
sending a second requirement to a first Access and Mobility Management Function (AMF),
wherein the first AMF represents an AMF corresponding to a Protocol Data Unit (PDU) session of the first terminal served by the first UPF; the second requirement is used to request to establish a session resource related to the first MBS session, and the second requirement carries therein the first identifier and first information; and the first information represents PDU session information of a terminal in the VN group associated with the first AMF.

9. The method according to claim 5, wherein the performing the first operation for the first VN group comprises:
sending a third requirement to the first UPF,
wherein the third requirement is used to request to revise or disable the first MBS session, and the third requirement carries therein a first identifier used to identify the first MBS session and a first PDR and/or a first FAR of the first MBS session.

10. The method according to claim 5, wherein performing the first operation for the first VN group comprises:
sending a fourth requirement to the first UPF,
wherein the fourth requirement is used to request to release or delete the first MBS session, and the fourth requirement carries therein a first identifier used to identify the first MBS session.

11. The method according to claim 5, wherein performing the first operation for the first VN group comprises:
sending a fifth requirement to the first UPF,
wherein the fifth requirement is used to request to establish or revise a PDU session for the first terminal, and the fifth requirement does not carry therein a PDR and/or a FAR of a downlink multicast message and/or a broadcast message.

12. The method according to claim 8 or 11, further comprising:
transmitting a sixth requirement to a Radio Access Network (RAN) by using the first AMF,
wherein the sixth requirement is used to request to create a first context of the first MBS session, and/or is used to request to establish a mapping between the first context and a second context of the PDU session, and/or is used to request to allocate an N3 interface tunnel resource to the first MBS session.

13. The method according to claim 2, wherein the broadcast messages and/or the multicast messages on the internal interface of the first VN group match and forward downlink data packets in the first PDR and/or the first FAR of the first MBS session.

14. The method according to claim 7, wherein a source interface of the first PDR comprises an internal interface of the first VN group, and a destination address of the first PDR comprises a broadcast address and/or a multicast address; and
the first FAR is used to instruct to forward the broadcast message and/or the multicast message matching the first PDR through an N3 interface tunnel of the first MBS session, and/or is used to instruct to forward the broadcast message and/or the multicast message matching the first PDR through an N9 interface tunnel of the first MBS session.

15. The method according to claim 1, wherein a second PDR and/or a second FAR of the PDU session of the first terminal do not support matching of downlink broadcast messages and/or multicast messages, and do not support forwarding of downlink broadcast messages and/or multicast messages.

16. A device for transmitting a broadcast message, comprising:
a session management unit, configured to perform a first operation for a first Virtual Network (VN) group, wherein the first operation comprises at least one of:
creating a first Multicast and Broadcast Service (MBS) session;
revising the first MBS session;
releasing the first MBS session;
deleting the first MBS session; or
disabling the first MBS session,
wherein the first MBS session is used to send one or more multicast messages and/or one or more broadcast messages in the first VN group to at least one first terminal, and the first terminal represents one or more terminals within the first VN group.

17. A first Session Management Function (SMF), comprising: a first processor and a first communications interface,
wherein the first communication interface is configured to perform a first operation for a first Virtual Network (VN) group, wherein the first operation comprises at least one of:
creating a first Multicast and Broadcast Service (MBS) session;
revising the first MBS session;
releasing the first MBS session;
deleting the first MBS session; or
disabling the first MBS session,
wherein the first MBS session is used to send one or more multicast messages and/or one or more broadcast messages in the first VN group to at least one first terminal, and the first terminal represents one or more terminals within the first VN group.

18. A first Session Management Function (SMF), comprising: a first processor and a first memory configured to store a computer program executable on the first processor,
when the first processor is configured to run the computer program, the steps of the method according to any one of claims 1 to 15 are performed.

19. A storage medium having a computer program stored thereon, wherein the computer program, when executed by a processor, implements steps of the method according to claim 1 to 15.
